## Europäisches Patentamt

## European Patent Office

## Office européen des brevets

(19)

(11) Veröffentlichungsnummer: **0 201 798**
**B1**

(12) **EUROPÄISCHE PATENTSCHRIFT**

(45) Veröffentlichungstag der Patentschrift:
06.09.89

(51) Int. Cl.⁴: **B 32 B 27/32**

(21) Anmeldenummer: **86105898.0**

(22) Anmeldetag: **29.04.86**

(54) **Heisssiegelbare Mehrschichtfolien aus Polyolefinen.**

(30) Priorität: **11.05.85 DE 3517082**

(43) Veröffentlichungstag der Anmeldung:
**20.11.86 Patentblatt 86/47**

(45) Bekanntmachung des Hinweises auf die Patenterteilung:
**06.09.89 Patentblatt 89/36**

(84) Benannte Vertragsstaaten:
**AT BE CH DE FR GB IT LI NL SE**

(56) Entgegenhaltungen:
**EP-A- 0 002 606**
**EP-A- 0 137 454**
**US-A- 4 230 767**

(73) Patentinhaber: **Wolff Walsrode Aktiengesellschaft,
Postfach, D-3030 Walsrode 1 (DE)**

(72) Erfinder: **Schinkel, Ingo, Dipl.-Ing., Witternstrasse 14,
D-3030 Walsrode (DE)**
Erfinder: **Böhner, Jürgen, Dipl.-Ing., Am Haselbusch 3,
D-3036 Bomlitz (DE)**

(74) Vertreter: **Zobel, Manfred, Dr. et al, c/o BAYER AG
Konzernverwaltung RP Patentabteilung Bayerwerk,
D-5090 Leverkusen (DE)**

EP 0 201 798 B1

**Beschreibung**

Die vorliegende Erfindung betrifft heißsiegelbare, orientierte Polyolefin-Mehrschichtfolien, die sich besonders als Einschlagfolien eignen.

Mehrschichtfolien aus Polyolefinen, insbesondere aus einer Polypropylenbasisschicht und einer heißsiegelbaren Schicht aus Polyethylen oder Polyethylencopolymerisaten sind seit langem bekannt.

So werden in der DE-AS 2 351 923 und in der EP-OS 002 606 heißsiegelfähige orientierte Mehrschichtfolien aus einer Polypropylenfolie und einer heißsiegelbaren Schicht aus einem linearen Polyethylencopolymeren mit niedriger Dichte beschrieben. Diese Mehrschichtfolien sollen sich durch ein optisch einwandfreies Aussehen der Siegelnähte auszeichnen. Außerdem können sie durch Coextrusion hergestellt werden, wodurch ein breiterer Siegelbereich erzielt werden kann. Für Verpackungszwecke sind diese Mehrschichtfolien aber nicht geeignet, da sie nicht nur ein völlig unbrauchbares Gleitverhalten auf den automatischen Einschlagmaschinen aufweisen, sondern auch, was noch wesentlich nachteiliger ist, aufgrund ihrer viel zu geringen Kratzfestigkeit rasch zu optisch unansehnlichen Verpackungen führen.

Es stellte sich daher die Aufgabe, Mehrschichtfolien, insbesondere Einschlagfolien zur Verfügung zu stellen, die nicht nur eine niedrige Siegelanspringtemperatur und hohe Siegelfestigkeit, sondern auch eine sehr gute Optik und Maschinengängigkeit auf den üblichen Verpackungsmaschinen unterschiedlichen Typs aufweisen.

Erfindungsgemäß gelang dies durch Bereitstellen einer heiß-siegelbaren, mindestens monoaxial orientierten Mehrschichtfolie, bestehend aus einer Folie aus einem Propylenpolymeren als Basisschicht und wenigstens einer siegelbaren Schicht aus einer Kombination von

a) 66,5 bis 94,5, vorzugsweise 78 bis 89,1 Gew.-% eines statistischen, linearen Ethylencopolymerisats niedriger Dichte (LLDPE)

b) 5 bis 30 Gew.-%, vorzugsweise 10 bis 20 Gew.-% eines niedermolekularen, mit dem LLDPE verträglichen Harzes, mit Ausnahme eines niedermolekularen Harzes aus α-Olefinen mit höchstens 3 C-Atomen, wie ein niedermolekulares Polyethylen oder Polypropylen,

c) 0,3 bis 2, vorzugsweise 0,5 bis 1 Gew.-% einer Mischung aus einem Polyethylenwachs und einem Oxazolinwachs

d) 0,2 bis 1,5, vorzugsweise 0,4 bis 1 Gew.-% Polydiorganosiloxan und

e) gegebenenfalls üblichen Additiven und Hilfsstoffen, wobei die Summe aus a) – d) immer 100 Gew.-% ergeben muß.

Die Basisschicht der erfindungsgemäßen siegelbaren Mehrschichtfolie besteht aus einem Propylenpolymeren, das bis zu höchstens 10 Gew.-% ein weiteres α-Olefin mit höchstens 8 C-Atomen, vorzugsweise Ethylen enthält. Vorzugsweise wird ein isotaktisches Polypropylen mit einer Dichte von 0,9 bis 0,91 g/cm³ und einem Schmelzflußindex von 1 bis 4 g/10 Minuten bei 230 °C/21,6 N (nach DIN 53 735) verwendet.

Der Hauptbestandteil (a) der siegelbaren Schicht ist ein lineares statistisches Ethylencopolymeres niedriger Dichte (LLDPE), das aus Ethylen und bis zu 12 Mol-%, vorzugsweise 2–8 Mol-% wenigstens eines weiteren α-Olefins mit $C_3$ bis $C_{10}$ aufgebaut ist, vorzugsweise aus Propylen, Buten-1, Penten, Hexen, Octen, Nonen, Decen und/oder 4-Methylpenten-1, besonders bevorzugt 1-Buten, Hexen oder Octen. Die Copolymerisation erfolgt bei Polymerisationsbedingungen, bei denen man normalerweise Polyethylen hoher Dichte erhält, d.h. bei niedrigen Drücken und Temperaturen in Gegenwart von organometallischen Katalysatoren, Verfahren zur Herstellung von linearen Ethylencopolymerisaten mit niedriger Dichte sind in den US-Patenten Nr. 3 645 992 und 4 011 382 beschrieben. Die Ethylencopolymerisate, die erfindungsgemäß verwendet werden, sollten eine Dichte unterhalb von 0,94, vorzugsweise eine Dichte von 0,900 bis 0,925, besonders bevorzugt 0,903 bis 0,915 g/cm³ aufweisen.

Als niedermolekulare, mit dem LLDPE verträgliche Harze können natürliche oder synthetische Harze mit einem Erweichungspunkt von 60 bis 180 °C, bevorzugt 80 bis 100 °C, verwendet werden. Es sind solche Harze als verträglich anzusehen, die in einer Konzentration bis zu 30 Gew.-% dem Siegelschichtmaterial zugemischt werden können, ohne daß eine Verschlechterung der optischen Eigenschaften der Folie eintritt. Hierfür können Collophonium, Dammarharze, Terpentinharze, Kohlenwasserstoffharze, Ketonharze, Phenolharze, chlorierte aliphatische oder aromatische Kohlenwasserstoffharze verwendet werden. Diese Harze sind in Ullmanns Encyclopädie der technischen Chemie, Band 12, 1976, Seiten 525 bis 555 beschrieben.

Vertreter der natürlichen Harze sind Collophonium und Dammarharze. Ersteres wird durch Abdestillieren von Terpentinöl aus den Harzen von Kiefern oder Wurzelstöcken gewonnen. Auch Collophoniumester sowie modifiziertes Collophonium wie dehydriertes, hydriertes oder fraktioniertes Collophonium wird darunter verstanden.

Dammarharze sind ebenfalls natürliche Harze, die farblose bis gelbe Stoffe darstellen, die ebenfalls durch Lebendharzung gewonnen werden.

Als Kohlenwasserstoffharze bezeichnet man Polymerisate aus Kohlenstoff und Wasserstoff, die man bei der Kohlenteerdestillation bei Crackprozessen von Naphtha- bzw. Gasöl aus Kokereigas oder aus Terpentinöl gewinnt. Typische Vertreter dieser Harze sind Cumeronharze, Erdölharze, Terpenharze, Styrolharze, Cyclopentadienharze. Unter Cumeronharze versteht man Kohlenwasserstoffharze, die man aus Kokereigas oder durch Polymerisation von Harzbildnern, wie sie in den Steinkohlenteerdestillationen vorhanden sind, erhalten werden, wobei durch Copolymerisation mit Phenol modifizierte Cumeronharze gewonnen werden.

Bei der Crackung von Naphtha- oder Gasöl erhält man die Rohstoffbasis aus der die Erdölharze gewonnen werden. Harzbildende Verbindungen sind unter anderem Buten, Butadien, Penten, Piperylen, Isopren, Cyclopentadien, Dicyclopentadien, Alkylbenzole, Methyldicyclopentadien, Methylinden, Naphthalinstyrolinden, Vinyltoluol, Methylstyrol.

Homopolymere mit geringem Molekulargewicht von Styrol und weiteren Copolymeren wie $\alpha$-Methylstyrol, Vinyltoluol und Butadien sind ebenfalls als niedermolekulare Harze geeignet.

Die Cyclopentadienharze werden aus Steinkohlenteerdestillaten und abgetrennten Erdölgasen hergeleitet. Die Polymerisate erhält man, indem man die ungesättigten Verbindungen über einen längeren Zeitraum hohen Temperaturen aussetzt.

Die Terpenharze gewinnt man durch Polymerisation von Terpenen wie z. B. von $\beta$-Pinen, $\alpha$-Pinen, Dipenten, Limonen, Myzen, Bor, Mylen, Camphen und ähnlichen Terpenen.

Die chlorierten aliphatischen oder aromatischen Kohlenwasserstoffe enthalten im allgemeinen 30 bis 70 Gew.-% Chlor und sind unter dem Namen Chlorwachse bekannt bzw. leiten sich vom Biphenylchlorid, Terphenyl oder deren Mischungen ab.

Die genannten Kohlenwasserstoffharze können auch als modifizierte Produkte eingesetzt werden, wobei eine Modifizierung durch Copolymerisation mit speziellen Monomeren oder durch Reaktion mit weiteren Polymerisaten, insbesondere aber eine Hydrierung oder Teilhydrierung der ungesättigten Bestandteile der Harze möglich ist, wie z. B. hydrierte polycyclische Kohlenwasserstoffharze auf Basis von Cyclopentadien.

Auch Phenolharze, die man durch Reaktion von Phenolen und Aldehyden erhält, sind geeignet. Neben Phenol können Kresol, Xylenol, Paraphenylphenol mit Formaldehyd, Furfurylaldehyd oder Acetaldehyd kondensiert werden.

Als Komponente c) enthält die siegelbare Schicht eine Mischung aus einem Polyethylenwachs und einen Oxazolinwachs, hergestellt aus Stearinsäure und einem Aminoalkohol. Als Aminoalkohol wird bevorzugt Trishydroxymethylaminomethan eingesetzt. Die beiden Mischungskomponenten können in einem breiten Mischungsbereich verwendet werden, vorzugsweise in einem Mischungsverhältnis von 1:1.

Weiterhin enthält die siegelbare Schicht Polydiorganosiloxane oder deren Mischungen, die bei 25 °C eine kinematische Viskosität von mindestens 100 mm²/Sekunde aufweisen. Geeignete Polydiorganosiloxane sind Polydialkylsiloxane, Polyalkylphenylsiloxane, olefinmodifizierte Siloxanöle, polyethermodifizierte Siloxanöle, olefin/polyethermodifizierte Silikonöle, epoxymodifizierte Silikonöle und alkoholmodifizierte Silikonöle, Polydialkylsiloxane mit vorzugsweise $C_1$ bis $C_4$ in der Alkylgruppe, insbesondere Polydimethylsiloxan ist besonders geeignet. Vorzugsweise sollten die Polydiorganosiloxane eine kinematische Viskosität von wenigstens $10^5$ mm²/Sekunde bei 25 °C, besonders bevorzugt von wenigstens $10^6$ mm² pro Sekunde aufweisen.

Eine Ausrüstung der Schichten mit üblichen Additiven und Hilfsmitteln wie z. B. Gleitmitteln, Antiblockmitteln und Antistatika in üblichen Mengen ist möglich. So können ungesättigte Fettsäureamide, gesättigte Fettsäureamide wie z. B. Stearinsäureamid, Erucasäureamid, mit dem Polymeren der Siegelschicht unverträgliche thermoplastische Polymere wie z. B. Polyamid-12, anorganische Abstandshalter wie $SiO_2$, $CaCO_3$ oder antistatische Verbindungen wie langkettige aliphatische tertiäre Amine, die gegebenenfalls einfach ungesättigt sein können, wie ethoxylierte, tertiäre Amine, z. B. N,N-Bis-(2-hydroxyethyl)($C_{12}$–$C_{16}$)-alkylamine eingesetzt werden.

Die erfindungsgemäßen Mehrschichtfolien können nach üblichen Verfahren wie Laminierung, Beschichtung oder Schmelz(Co)extrusion hergestellt werden, wobei die Kombination, aus der die siegelbare Schicht besteht, durch Masterbatch, vorzugsweise aber durch direkte Compoundierung hergestellt werden kann.

Die erfindungsgemäßen Mehrschichtfolien sind zumindest monoaxial orientiert, vorzugsweise werden sie einer biaxialen Reckung unterworfen. Dabei wird die Längsreckung vorzugsweise im Verhältnis 5:1 bis 7:1 und die Querreckung im Verhältnis 7:1 bis 10:1 vorgenommen.

Die erfindungsgemäßen Mehrschichtfolien sollten vorzugsweise eine Dicke von 20 bis 50 µm aufweisen, wobei die heißsiegelbare Schicht vorzugsweise eine Dicke von 0,8 bis 2 µm, besonders bevorzugt von 1 µm hat.

Die erfindungsgemäßen Mehrschichtfolien eignen sich besonders als Verpackungsmaterial, insbesondere als Einschlagfolie, und können zu diesem Zweck bedruckt und mit Aufreißstreifen versehen werden.

In den nachfolgenden Beispielen wurden folgende Prüfmethoden zur Bestimmung der Werte verwendet.

Die Trübung wurde nach ASTM D 1003-52 bestimmt.

Zur Bestimmung der Klarheit und des Glanzes der Folie wurde ein photoelektrischer Glanzmesser nach Dr. B. Lange, Berlin, bestehend aus einer Niedervoltglühlampe und einem Kondensor, die unter 45° die Probe beleuchten und einem zweiten unter 45° zur Meßebene stehenden Schenkel mit Lochblende und Photozelle benutzt. Angeschlossen ist ein fein regulierbares Anzeigegerät (Mikroampermeter), das außerdem die Stromversorgung und den Spannungskonstanthalter für die Glühlampe enthält. Der Glanz ist definiert als der unter 45° regulär reflektierte Lichtanteil in Prozenten, bezogen auf einen oberflächenversilberten Spiegel als 100%iger Standard. Bei der Prüfung des Glanzes wird auf den Glanzmesser eine polierte Schwarzglasplatte als Zwischenstandard gesetzt, weil der Silberspiegelstandard nicht beständig im Anlaufen durch Luftverunreinigung ist. Dieser weist genau 5% des Glanzes einer oberflächenversilberten Spiegelglasplatte auf. Die Galvanometeranzeige der Photozelle des Glanzmessers wird daher über den Schwarzglaszwischenstandard zwecks Erhöhung der Ablesegenauigkeit der Skaleneinteilung mit dem Regelpotentiometer eingestellt. Die zu prüfende Folie wird quer zur Laufrichtung, bezogen auf die optische Achse des Glanzmessers, über mattschwarzem Photopapier plan unter den Glanzmesser gelegt und an fünf einwandfreien Stellen gemessen. Man teilt die Galvanometeranzeige durch zehn und ermittelt den Mittelwert. Die Klarheit einer Folie ist definiert aus der nach zweimaligem Passieren der Folie unter 45° verbleibende Lichtanteil in Prozenten, bezogen auf die Einstellung des Meßgerätes auf 100% ohne Prüffolie. Dazu stellt man den Glanzmesser ohne Prüffolie auf eine polierte hochglanzverchromte Eisenplatte und stellt die Galvanometeranzeige der Photozelle des Glanzmessers mit dem Regelpotentiometer auf 100 Scalenteile. Aus der zu prüfenden Folie schneidet man quer über die Bahnbreite in Längsrichtung mit Hilfe einer Metallschablone fünf Probestreifen (3 × 15 cm) aus und legt diese nacheinander über zwei je 9 mm hohe, 29,5 mm breite Messingstege, die sich in 53 mm Abstand auf der verchromten Eisenplatte befinden und stülpt den Glanzmesser mit seiner Bodenöffnung darüber. Auf dem Galvanometer kann nun direkt die Klarheit der Folie in Prozenten abgelesen werden. Angegeben wird der Mittelwert der Einzelwerte.

Zur Bestimmung der Festigkeit von Siegelnähten wird die Siegelfestigkeit bei niedrigem Siegeldruck geprüft. Dabei wird unter Siegelfestigkeit die Kraft verstanden, die erforderlich ist, um eine unter definierten Bedingungen ($0,35 \text{ N/cm}^2$, 0,5 sec. und den in der Tabelle angegebenen Temperaturen) hergestellte Siegelnaht zu trennen. Die Siegelfestigkeit wird in Newton angegeben und auf einen 15 mm breiten Prüfstreifen bezogen.

Zur Bestimmung der Kratzfestigkeit wird die unter Verwendung der Ulbrichtschen Kugel bestimmte Trübung festgestellt. Dabei wird die Trübung einer Folie vor und nach dem Verkratzen gemessen. Das Verkratzen erfolgt mit Hilfe von 40 g staubfreiem Siliciumcarbid, das innerhalb einer definierten Zeit auf eine um 45° gegen die horizontal geneigte Folie gestreut wird.

Beispiele 1 bis 4

Zur Herstellung von heißsiegelbaren Mehrschichtfolien wird in ein lineares, statistisches Ethylencopolymeres, das ungefähr 4 Mol-% Octeneinheiten anpolymerisiert enthält und eine Dichte von $0,911 \text{ g/cm}^3$ aufweist, 0,5 Gew.-% von Polydimethylsiloxan mit einer kinematischen Viskosität von $10^6 \text{ mm}^2/\text{sec}$, 0,5 Gew.-% einer 1:1-Mischung von Polyethylenwachs und einem Oxazolinwachs, 0,15 Gew.-% eines thermoplastischen Polyamid-12 als Abstandshalter, 0,2 Gew.-% Stearinsäureamid, 0,2 Gew.-% Erucasäureamid und 0,5 Gew.-% N,N-Bis-(2-hydroxyethyl)-($C_{12}$–$C_{16}$)-alkylamin und die in der nachfolgenden Tabelle angegebenen Gewichtsprozente eines niedermolekularen hydrierten polycyclischen Kohlenwasserstoffharzes auf der Basis von Cyclopentadien (ESCOREZ® 5000) eingearbeitet und das Siegelmaterial und nach üblichen Verfahren auf beiden Oberflächen der Basisfolie aus Polypropylen der Dichte $0,905 \text{ g/cm}^3$, dem Schmelzindex von 3,3 g/10 Minuten bei 230 °C, 21,6 N und dem Schmelzbereich von 160 bis 166 °C aufgetragen und verstreckt, so daß eine Verbundfolie aus LLDPE/Polypropylen/LLDPE mit einer Längsreckung im Verhältnis 5:1 und einer Querreckung im Verhältnis 10:1 und einer Dickenverteilung 1 μm/18 μm/1 μm erhalten wird.

|  | Beispiel 1 | Beispiel 2 | Beispiel 3 | Beispiel 4* |
|---|---|---|---|---|
| LLPDE Gew.-% | 95 | 90 | 80 | 100 |
| Kohlenwasserstoffharz Gew.-% | 5 | 10 | 20 | – |
| Trübung % | 1,9 | 1,9 | 1,8 | 1,8 |
| Glanz (GE) | 88 | 88,2 | 89,4 | 88 |
| Klarheit % | 82,5 | 82,8 | 83,1 | 80,8 |
| Kratzfestigkeit | 1,0/37,3 | 1,15/25,5 | 1,38/24,3 | 0,7/40,1 |
| Niederdrucksiegelung Siegelfestigkeit (N/15 mm) 80 °C | 1,4 | 1,6 | 2,0 | 0 |
| 85 °C | 1,9 | 2,0 | 2,1 | 0,8 |
| 90 °C | 2,2 | 2,3 | 2,4 | 1,4 |
| 100 °C | 2,1 | 2,2 | 2,6 | 1,8 |
| 110 °C | 2,1 | 2,2 | 2,2 | 1,8 |

* Vergleichsbeispiel

Patentansprüche

1. Heiß-siegelbare, wenigstens monoaxial orientierte Mehrschichtfolie aus einer Basisschicht aus einem Propylenpolymeren und wenigstens einer siegelbaren Schicht aus einer Kombination von

a) 66,5 bis 94,5 Gew.-% eines linearen, statistischen Ethylencopolymerisats niedriger Dichte (LLDPE)

b) 5 bis 30 Gew.-% eines niedermolekularen, mit dem LLDPE verträglichen Harzes, mit Ausnahme eines niedermolekularen Harzes aus α-Olefinen mit höchstens 3 C-Atomen,

c) 0,3 bis 2 Gew.-% einer Mischung aus einem Polyethylenwachs und einem Oxazolinwachs

d) 0,2 bis 1,5 Gew.-% eines Polydiorganosiloxans und

e) gegebenenfalls üblichen Additiven und Hilfsstoffen, wobei die Summe aus a) – d) immer 100 Gew.-% ergeben muß.

2. Mehrschichtfolie nach Anspruch 1, dadurch gekennzeichnet, daß die Kombination 78–89,1 Gew.-% der Komponente a), 10–20 Gew.-% der Komponente b), 0,5–1 Gew.-% der Komponente c) und 0,4–1 Gew.-% der Komponente d) enthält.

3. Mehrschichtfolien nach Anspruch 1 oder 2, dadurch gekennzeichnet, daß die Komponente a) aus Ethylen und bis zu 12 Mol-%, vorzugsweise 2–8 Mol-%, wenigstens eines weiteren α-Olefins mit $C_3$–$C_{10}$ aufgebaut ist.

4. Mehrschichtfolien nach Ansprüchen 1–3, dadurch gekennzeichnet, daß die Komponente a) ein Copolymerisat aus Ethylen und Propylen, Buten-1, Penten, Hexen, Octen, Nonen und Decen und/oder 4-Methylpenten-1, bevorzugt Buten-1, Hexen oder Octen ist.

5. Mehrschichtfolien nach Ansprüchen 1–4, dadurch gekennzeichnet, daß die Komponente a) eine Dichte <0,94 vorzugsweise eine Dichte von 0,900 bis 0,925, besonders bevorzugt 0,903 bis 0,915 g/cm³ aufweist.

6. Mehrschichtfolien nach Ansprüchen 1–5, dadurch gekennzeichnet, daß die Komponente b) einen Erweichungspunkt von 60 bis 180 °C, bevorzugt 80 bis 100 °C, aufweist.

7. Mehrschichtfolien nach Ansprüchen 1–6, dadurch gekennzeichnet, daß als Komponente b) Collophonium, Dammarharze, Terpentinharze, Kohlenwasserstoffharze, Ketonharze, Phenolharze, chlorierte aliphatische oder aromatische Kohlenwasserstofharze verwendet werden.

8. Mehrschichtfolien nach Ansprüchen 1–7, dadurch gekennzeichnet, daß als Komponente b) modifizierte Kohlenwasserstoffharze, vorzugsweise hydrierte, polycyclische Kohlenwasserstoffharze auf Basis von Cyclopentadien verwendet werden.

9. Mehrschichtfolien nach Ansprüchen 1–8, dadurch gekennzeichnet, daß als Komponente c) eine Mischung aus einem Polyethylenwachs und einem Oxazolinwachs, hergestellt aus Stearinsäure und einem Aminoalkohol, bevorzugt Trishydroxymethylaminomethan, eingesetzt wird.

10. Verwendung der Mehrschichtfolien nach Ansprüchen 1–9 als Verpackungsmaterial, bevorzugt als Einschlagfolie.

## Claims

1. A heat-sealable, at least monoaxially oriented multilayer film comprising a base layer of a propylene polymer and at least one sealable layer of a combination of

a) 66.5 to 94.5% by weight of a linear, low-density statistical ethylene copolymer (LLDPE),

b) 5 to 30% by weight of a low molecular weight resin compatible with the LLDPE, except for a low molecular weight resin of α-olefins containing at most 3 C atoms,

c) 0.3 to 2% by weight of a mixture of a polyethylene wax and an oxazoline wax,

d) 0.2 to 1.5% by weight of a polydiorganosiloxane and

e) optionally standard additives and auxiliaries, the sum of a) to d) always having to be 100% by weight.

2. A multilayer film as claimed in claim 1, characterized in that the combination contains 78 to 89.1% by weight of component a), 10 to 20% by weight of component b), 0.5 to 1% by weight of component c) and 0.4 to 1% by weight of component d).

3. Multilayer films als claimed in claim 1 or 2, characterized in that component a) is synthesized from ethylene and up to 12 mol-% and preferably 2 to 8 mol-% of at least one other α-olefin containing 3 to 10 carbon atoms.

4. Multilayer films as claimed in claims 1 to 3, characterized in that component a) is a copolymer of ethylene and propylene, 1-butene, pentene, hexene, octene, nonene and decene and/or 4-methyl-1-pentene, preferably 1-butene, hexene or octene.

5. Multilayer films as claimed in claims 1 to 4, characterized in that component a) has a density of <0.94, preferably of 0.900 to 0.925 and, more preferably, 0.903 to 0,915 g/cm³.

6. Multilayer films as claimed in claims 1 to 5, characterized in that component b) has a softening point in the range from 60 to 180 °C and preferably in the range from 80 to 100 °C.

7. Multilayer films as claimed in claims 1 to 6, characterized in that colophony, dammar resins, turpentine resins, hydrocarbon resins, ketone resins, phenolic resins, chlorinated aliphatic or aromatic hydrocarbon resins are used as component b).

8. Multilayer films as claimed in claims 1 to 7, characterized in that modified hydrocarbon resins, preferably hydrogenated polycyclic hycrocarbon resins based on cyclopentadiene, are used as component b).

9. Multilayer films as claimed in claims 1 to 8, characterized in that a mixture of a polyethylene wax and an oxazoline wax prepared from stearic acid and an aminoalcohol, preferably trishydroxymethyl aminomethane, is used as component c).

10. The use of the multilayer films claimed in claims 1 to 9 as a packaging material and preferably as a wrapping film.

## Revendications

1. Feuille multicouche soudable à chaud, à orientation au moins monoaxiale, consistant en une couche de base en un polymère du propylène et au moins une couche soudable qui consiste en une combinaison de

a) 66,5 à 94,5% en poids d'un copolymère linéaire statistique de l'éthylène à basse densité (LLDPE),

b) 5 à 30% en poids d'une résine à bas poids moléculaire compatible avec le LLDPE, à l'exclusion d'une résine à bas poids moléculaire consistant en α-oléfines à 3 atomes de carbone au maximum,

c) 0,3 à 2% en poids d'un mélange d'une cire de polyéthylène et d'une cire d'oxazoline,

d) 0,2 à 1,5% en poids d'un polydiorganosiloxanne, et

e) le cas échéant des additifs et produits auxiliaires usuels, la somme des composants a) à d) étant toujours égale à 100% en poids.

2. Feuille multicouche selon la revendication 1, caractérisée en ce que la combinaison contient 78 à 89,1% en poids du composant a), 10% à 20% en poids du composant b), 0,5 à 1% en poids du composant c) et 0,4 à 1% en poids du composant d).

3. Feuilles multicouches selon la revendication 1 ou 2, caractérisée en ce que le composant a) est constitué d'éthylène et d'une proportion allant jusqu'à 12 moles% et de préférence de 2 à 8 moles% d'au moins une autre α-oléfine en $C_3$–$C_{10}$.

4. Feuilles multicouches selon les revendications 1 à 3, caractérisées en ce que le composant a) est un copolymère de l'éthylène et du propylène, du butène-1, du pentène, de l'hexène, de l'octène, du nonène et du décène et/ou du 4-méthyl-pentène-1, de préférence du butène-1, de l'hexène ou de l'octène.

5. Feuilles multicouches selon les revendications 1 à 4, caractérisées en ce que le composant a) a une densité inférieure à 0,94 et de préférence une densité de 0,900 à 0,925 et plus spécialement de 0,903 à 0,915 g/cm³.

6. Feuilles multicouches selon les revendications 1 à 5, caractérisées en ce que le composant b) a un point de ramollissement de 60 à 180 °C, de préférence de 80 à 100 °C.

7. Feuilles multicouches selon les revendications 1 à 6, caractérisées en ce que l'on utilise en tant que composant b) de la colophane, des résines dammars, des résines de térébenthines, des résines d'hydrocarbures, des résines cétoniques, des résines phénoliques, des résines d'hydrocarbures aliphatiques ou aromatiques chlorés.

8. Feuilles multicouches selon les revendications 1 à 7, caractérisées en ce que l'on utilise en tant que composant b) des résines d'hydrocarbures modifiées, de préférence des résines d'hydrocarbures polycycliques hydrogénées à base de cyclopentadiène.

9. Feuilles multicouches selon les revendications 1 à 8, caractérisées en ce que l'on utilise en tant que composant c) un mélange d'une cire de polyéthylène et d'une cire d'oxazoline préparée à partir de l'acide stéarique et d'un aminoalcool, de préférence le trishydrométhylaminométhane.

10. Utilisation des feuilles multicouches selon les revendications 1 à 9 en tant que matière d'emballage, de préférence en tant que feuilles d'emballage.